(19) **Europäisches Patentamt**
**European Patent Office**
**Office européen des brevets**

(11) **EP 2 375 581 B1**

(12) **EUROPEAN PATENT SPECIFICATION**

(45) Date of publication and mention
of the grant of the patent:
**26.12.2012  Bulletin 2012/52**

(51) Int Cl.:
**H04B 7/06** (2006.01)

(21) Application number: **10290176.6**

(22) Date of filing: **01.04.2010**

(54) **Feedback for multi-user MIMO systems**

Rückkopplung für MIMO-Systeme mit mehreren Benutzern

Retour pour systèmes MIMO Multi-Utilisateurs

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**12.10.2011  Bulletin 2011/41**

(73) Proprietor: **Alcatel Lucent**
**75007 Paris (FR)**

(72) Inventors:
• **Wild, Thorsten**
**70435 Stuttgart (DE)**
• **Schmidberger, Elmar**
**70439 Stuttgart (DE)**

(74) Representative: **Wetzel, Emmanuelle et al**
**Alcatel Lucent**
**Intellectual Property & Standards**
**70430 Stuttgart (DE)**

(56) References cited:
**WO-A2-2009/072841     US-A1- 2008 101 498**

• **ALCATEL-LUCENT ET AL: "Estimation of extended PMI feedback signalling required for user intra-cell and inter-cell coordination" 3GPP DRAFT; R1-100419_ESTIM_PMI_FDBCK_SIG_ USER_PCOOR5, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Valencia, Spain; 20100118, 12 January 2010 (2010-01-12), XP050418069 [retrieved on 2010-01-12]**

• **ALCATEL-LUCENT: "Best Companion reporting for improved single-cell MU-MIMO pairing" 3GPP DRAFT; R1-090926-MU-MIMO-BESTCOMP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050318767 [retrieved on 2009-02-03]**

• **ALCATEL-LUCENT: "UE PMI feedback signalling for user pairing/coordination" 3GPP DRAFT; R1-090777_FEEDBACK_SIG_FOR_PREC_V06, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050318635 [retrieved on 2009-02-03]**

• **HUAWEI: "Adaptive Feedback: A New Perspective of the Adaptive Codebook" 3GPP DRAFT; R1-093059, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090818, 18 August 2009 (2009-08-18), XP050351450 [retrieved on 2009-08-18]**

• **HUAWEI: "Discussion on MU-MIMO in LTE-A" 3GPP DRAFT; R1-093842, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388349 [retrieved on 2009-10-06]**

**Description**

Background

This section introduces aspects that may be helpful in facilitating a better understanding of the invention. Accordingly, the statements of this section are to be read in this light and are not to be understood as admissions about what is in the prior art or what is not in the prior art.

In radio communications networks supporting Multiple-Input-Multiple-Output (MIMO) with downlink precoding, e.g. systems of the Long-Term Evolution, LTE, type, a pre-defined ordered set of precoding vectors (codebook) is known both at the base station and at the user equipments served by the base station. For finding an optimum precoding vector (or precoding matrix) for downlink transmissions to a specific user equipment, a preferred precoding vector is determined, the preferred precoding vector typically optimizing a certain optimality metric such as a transmission throughput according to a specific scheduling criterion. A preferred precoding vector index, PMI, indexing one of the ordered set of precoding vectors of the codebook is then fed back to the base station, together with a channel quality indicator indicating a channel quality when using the primary precoding vector for scheduling the user equipment on a specific time and frequency resource (block). The channel quality information may then be used for selecting an appropriate transport format (modulation and coding scheme) for downlink transmissions to the user equipments using the preferred precoding vector.

However, in this way, MIMO with downlink precoding is provided only to a single user, but no solution for multi-user MIMO is provided, i.e. for the case that two or more users are to be scheduled simultaneously on the same resources. For multi-user MIMO, a selection of combinations of user equipments which are best suited for multi-user transmissions has to be performed. In this respect, the inventors have proposed to provide an additional index of a preferred multi-user-MIMO pairing partner as additional feedback information to the base station. This so-called best companion index (BCI) may be accompanied by a corresponding channel quality degradation information (delta-CQI), indicating a change / degradation of a channel quality (and thus of a desired transport format) when a co-scheduled pairing partner is served on the same multiple access resource. Optionally, multiple BCIs + delta-CQIs may be reported (resulting in a higher feedback overhead).

A problem when only a single BCI (+delta-CQI) is provided as feedback information is that the probability of finding suitable pairing combinations is low when the ratio of the number of active users over the codebook size gets small (e.g. <1). This could be improved by offering multiple best companions and corresponding delta-CQIs via feedback, but this multiplies the required feedback signaling overhead.

For instance, LTE Release8 with 4 antennas at the base station uses a 4bit PMI and a 5 bit CQI. Each best companion may require e.g. a 4bit BCI and a 3 bit delta-CQI. So with 1, 2, 3, ... reported best companions, the signaling feedback overhead increases by 77%, 155%, 233%, .... However, such large feedback rates for the case of a low number of users is not desirable and may be even impossible to achieve in some situations.

The prior art document ALCATEL-LUCENT: "Estimation of extended PMI feedback signalling required for user intra-cell and inter-cell coordination", 3GPP TSG RAN WG1 #59bis meeting, R1-100419, Valencia, Spain; 12 January 2010, discloses the reporting, in addition to a precoding vector information PMI indicating a primary precoding vector $w_{PMI}$ together with a channel quality information CQI for scheduling a first user equipment, also a channel quality degradation information Delta-CQI for scheduling a second user equipment on the same resources.

Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

A first aspect of the invention relates to a base station for a SDMA-capable cell of a radio communications system, adapted for: receiving precoding vector information indicating a primary precoding vector in an ordered set of precoding vectors; receiving channel quality information indicating a channel quality when using the primary precoding vector for scheduling a first user equipment; receiving channel quality degradation information indicating a degradation of a channel quality when scheduling a second user equipment on the same time and frequency resources using a secondary precoding vector of a pre-defined ordered set of secondary precoding vectors being selected in dependence of the primary precoding vector; the base station being further adapted for: correlating the channel quality degradation information with corresponding secondary precoding vectors of the selected ordered set based on an order of reception of the channel quality degradation information.

The basic idea for reducing the feedback overhead is to report the channel quality degradation information (delta-CQI) for an ordered fixed (pre-defined) set of (secondary) precoding vectors which varies in dependence of the first precoding vector (PMI). The secondary precoding vectors related to the different first precoding vectors may be stored in a table at both ends of the link (base station and user equipments). The order of the received channel quality degradation information allows an implicit assignment of the channel quality degradation information to the secondary precoding vectors of a given ordered set secondary precoding vectors. In this way, information about potential co-scheduled pairing partners may be provided without the need for transmitting an additional index indicating the co-scheduled partner. In other words, the feedback bits for the best companion index BCI may be dropped. They are not required anymore, as the order of the channel quality degradation information defines the corresponding fixed companion index, and the feedback overhead may be reduced considerably.

It will be understood that although the above description has been given for a single codebook index (PMI), an extension to multi-stage precoding feedback may be easily achieved. In multi-stage precoding, a common composite precoding codebook can be formed from multiple (e.g. two) codebooks, where a first PMI describes an index in the first codebook (e.g. indicating long-term changes), while a second PMI describes an index in a second codebook (e.g. for short-term changes) etc. The resulting composite precoding weights are obtained by a combination of the weights associated to those codebook indices (PMIs). The combination may e.g. performed by a matrix multiplication or a Kronecker product.

The ordered set of fixed companions (secondary precoding vectors) may now be combined with this multi-stage precoding feedback, e.g. in the following way: The secondary precoding vectors which are used for reporting the cannel quality degradation information (delta-CQIs) may be chosen as a subset of the overall composite codebook. Alternatively, the secondary precoding vectors may be chosen only from one part of the composite codebook, and an averaging of the delta-CQIs of another part of the codebook may be performed. For instance, it is possible to perform signalling of the delta-CQIs associated to the first codebook, while forming an average over all possible entries of the second codebook (or vice versa). Alternatively, the averaging may also be done over a subset, e.g. best N, where N is an integer which could range from one to the number of codebook entries.

In one embodiment, the base station further comprises: a transmission unit adapted for serving the first user equipment using the primary precoding vector, the transmission unit being further adapted for serving the second user equipment on the same time and frequency resources using one of the plurality of secondary precoding vectors. The secondary precoding vector which is used for transmissions to the second user equipment may be selected based on the value of the channel quality degradation information which typically varies for the different secondary precoding vectors, and on other scheduling constraints. In this respect, as described above, a channel quality degradation information averaged over all or some of the fixed companions / secondary precoding vectors of a given set may be reported in order to further reduce the required feedback rate.

In another embodiment, the base station is further adapted for signaling information about the ordered sets of secondary precoding vectors associated with respective primary precoding vectors to the user equipments of the cell. The secondary precoding vectors contained in a set associated with a respective primary precoding vector may be determined e.g. by simulations or measurements during a setup of the cell. The information about the ordered sets may then be transmitted to the user equipments arranged in the cell e.g. during a link setup. Alternatively, the attribution of secondary precoding vectors to a given primary precoding vector may be changed on the fly, i.e. when the link has already been established and traffic is exchanged on the link. The change of the attribution of secondary precoding vectors to primary precoding vectors may be induced e.g. by measurements indicating a change of a channel quality in the channels of the cell.

A second aspect relates to a user equipment for a SDMA capable cell of a radio communications system, the cell being adapted for: generating precoding vector information for indicating/indexing a primary precoding vector in an ordered set of precoding vectors, generating channel quality information indicating a channel quality when using the primary precoding vector for scheduling a first user equipment, and generating an ordered set of channel quality degradation information indicating a degradation of a channel quality when scheduling a second user equipment on the same time and frequency resources using a secondary precoding vector from a pre-defined ordered set of secondary precoding vectors being selected in dependence of the primary precoding vector.

The information about the order of secondary precoding vectors in a given set of secondary precoding vectors is typically made available to the user equipment by signaling from the base station. Thus, the user equipment may generate a sequence (ordered set) of channel quality degradation information which is transmitted as feedback to the base station, such that the base station may use the order of reception for correlating the bit sequences of the channel quality degradation information to a corresponding secondary precoding vector.

In one embodiment, the user equipment is further adapted for: determining the channel quality degradation information from a channel quality after receive combining, taking intra-cell interference due to transmissions using the secondary precoding vector into account. Once the primary precoding vector (PMI) has been selected, the channel quality degradation information is calculated for each of the secondary precoding vectors of the ordered set which is associated with the selected primary precoding vector, i.e. the channel quality degradation information is determined for the codebook entries of the potential pairing partners.

For quantification of the channel quality degradation, a (logarithmic) measure of the difference between the unpaired and the paired channel quality may be chosen. For both situations, the respective channel quality may be determined e.g. as a signal-to-interference-noise ratio, SINR, at the output of a receive combiner, e.g. based on a Minimum-Mean-Square-Error, MMSE calculation. In this specific case, the values of the channel quality degradation information are negative, as they indicate a loss due to pairing, caused by intra-cell interference and splitting of transmit power of the base station to the two user equipments.

In a further embodiment, an influence of a pre-defined power splitting to the user equipments on the channel quality degradation is removed from the channel quality degradation information provided as a feedback. In case that the power splitting is known, e.g. when an equal power splitting to both user equipments is performed, the channel quality degradation expressed as a SINR difference is at least 3dB. Thus, one may subtract this contribution from the value of the channel quality degradation information which is reported to the base station in order to increase the dynamic range of the limited number of bits which are used for the feedback. The channel quality degradation due to the power splitting is known at the base station and will be taken into account for the scheduling process.

Further aspects of the invention relate to a SDMA-capable cell for a radio communications system, e.g. in compliance with the LTE or LTE advanced standard, comprising: at least one of a base station as described above and a user equipment as described above, as well as to a radio communications system comprising at least one such SDMA-capable cell.

As is well-known, a cell providing SDMA capability typically has a base station with a number of N (e.g. N = 4) transmit antennas being arranged in an (active) antenna array. The different antennas of the array are addressed using precoding information (in the present case: precoding vectors), each precoding vector having a number of entries (antenna weights) corresponding to the number of transmit antennas. In the present case, it has been supposed that the transmission rank R is one, i.e. that the number of data layers multiplexed in the spatial domain is one. If a higher transmission rank R is used, the precoding vectors will be replaced by precoding matrices (N x R) containing a number R of precoding vectors. However, one skilled in the art will readily appreciate that using a higher transmission rank R = 2, 3, ... will not affect the approach as described herein, the only difference being that the precoding vectors will be replaced by precoding matrices. Also, as indicated above, the approach described herein may be easily extended to the case of a composite precoding codebook using two or more codebook indices (PMIs).

A further aspect of the invention relates to a method for providing information for scheduling at least two user equipments on the same resources of a SDMA-capable cell of a radio communications system, the method comprising: providing precoding vector information indicating a primary precoding vector in an ordered set of precoding vectors; providing channel quality information indicating a channel quality when using the primary precoding vector for scheduling a first user equipment, providing an ordered set of channel quality degradation information indicating a degradation of a channel quality when scheduling a second user equipment on the same time and frequency resources using a secondary precoding vector of a pre-defined ordered set of secondary precoding vectors, the pre-defined ordered set being selected in dependence of the primary precoding vector.

As has been described above, an (implicitly) ordered set of fixed companions (secondary precoding vectors) is associated with each codebook entry (primary precoding vector). As the specific order of the secondary precoding vectors is known at both ends of the link (user equipment(s) and base station), it is sufficient to feed back only the channel quality degradation information in an order with corresponds to that of the secondary precoding vectors. One skilled in the art will readily appreciate that it may also be possible to transmit the channel quality degradation information in an order which is a permutation of the order of the precoding vectors in the selected set, provided that the permutation (matrix) is known at both ends of the link, such that the base station may perform the assignment in a correct manner.

In one variant, an attribution of precoding vectors to the pre-defined ordered set of secondary precoding vectors is performed based on at least one of a relation of the precoding vectors to the primary precoding vector, in particular a distance metric to the primary precoding vector, and a channel quality statistics within the cell. Both the primary and the secondary precoding vectors belong to the same set of precoding vectors (codebook) defined for the cell. For each primary precoding vector of the codebook, a fixed number of secondary precoding vectors has to be chosen from the remainder of the precoding vectors of the codebook. A general design principle for the choice of the precoding vectors to be included into the set of fixed companions is to anticipate the attractive weight combinations for user pairing. This may be based e.g. on the following criteria: Angular properties of the precoding vectors (e.g. an angle of departure of a computed maximum of an antenna pattern) and a distance metric e.g. indicating orthogonality of the precoding / weight vectors. For example, quasi-orthogonality of the weight vectors may be determined by checking the scalar product (or another suitable distance metric) of the precoding vectors and choosing combinations of the primary precoding vector with secondary precoding vectors which result in a scalar product close to zero. Alternatively or in addition, the choice of secondary precoding vectors may be based on a SINR statistics obtained from simulations or measurements, e.g. on a channel quality statistics, tailored to antenna configuration, codebooks and propagation scenario.

In another variant, a pre-defined power splitting to the user equipments is performed, and a contribution of the pre-defined power splitting on the channel quality degradation is removed from the channel quality degradation information before transmission, thus increasing the dynamic range of the channel quality degradation information which is due to intra-cell interference, as the number of bits used for the feedback is limited.

In yet another variant, the method further comprises: determining the channel quality degradation information from a channel quality after receive combining, taking intra-cell interference due to transmissions using the secondary precoding vector into account. As indicated above, the channel quality degradation information may be expressed as a difference between the SINR of a single-user and a multi-user transmission. Now, either this difference may be reported directly or, e.g. in the case of LTE, the difference may be mapped to a change in a desired transport format index (using adaptive modulation and coding) before performing the reporting. For instance, after having estimated the SINR at the combiner output for a set of data symbols (e.g. orthogonal frequency division multiplex, OFDM, resource elements), a mapping function is used to obtain the estimated block error rate (BLER) for different alternative transport formats. The channel quality information may then correspond to a transport format not exceeding or being closest to a certain BLER. The mapping function for OFDM may be based on e.g. the so-called mutual information effective SINR mapping.

In another variant, the providing of information comprises: receiving the precoding vector information, the channel quality information, and the channel quality degradation information in a base station of the cell, and correlating the channel quality degradation information with corresponding secondary precoding vectors of the selected ordered set based on an order of reception of the channel quality degradation information. In this way, the number of bits required for the feedback may be reduced considerably.

In one improvement of this variant, the method further comprises: serving the first user equipment using the primary precoding vector, and serving the second user equipment on the same time and frequency resources using one of the plurality of secondary precoding vectors. The selection of the secondary precoding vector used for the multi-user transmissions will be based on the corresponding value of the channel quality degradation information, and possibly on further scheduling constraints.

In a further variant, the method further comprises: signaling information about the ordered set of secondary precoding vectors associated with a respective primary precoding vector from the base station to the user equipments of the cell. The secondary precoding vectors (fixed companions) may either be stored in a static way both at the base station and the user equipment(s) or they may be dynamically attributed, i.e. the fixed companions may be signaled on the forward link from the base station to the user equipment(s). The selection of the fixed companions may be optimized based on codebook properties, antenna configuration and propagation environment. Typically, the fixed companions are the weights resulting in the potentially most attractive pairing combination(s).

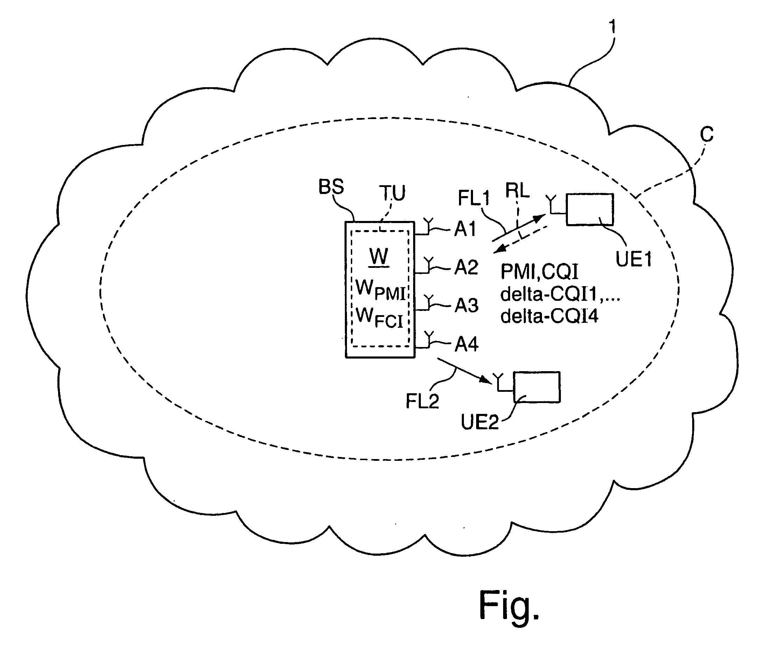

Further features and advantages are stated in the following description of exemplary embodiments, with reference to the figures of the drawing, which shows significant details, and are defined by the claims. The individual features can be implemented individually by themselves, or several of them can be implemented in any desired combination.

Brief Description of the Figures

Exemplary embodiments are shown in the diagrammatic drawing and are explained in the description below. The following are shown:

**Fig.**   the only Figure shows a schematic representation of an embodiment of a SDMA-capable cell according to the invention.

Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

**Fig.** shows a cell **C** of a radio communications system 1 which, in the present example, is in compliance with the LTE advanced standard and comprises a base station **BS** and two user equipments **UE1, UE2** which are served by the base station BS. The base station BS (eNodeB) comprises an array of four antennas **A1** to **A4** in a closely spaced configuration, allowing the cell C to perform space-division multiple access to the user equipments UE1, UE2 arranged in the cell C, i.e. serving the user equipments UE1, UE2 using downlink precoding with different precoding vectors w. In the present case, each precoding vector w has four entries, each entry representing a (usually complex-valued) transmission weight factor for one of the four antennas A1 to A4.

In the cell C, a pre-defined number of eight precoding vectors w, each containing different antenna weights, has been defined and stored in a table (codebook) both at the base station BS and in the user equipments UE1, UE2. A so-called codebook index is assigned to each precoding vector w in the table, indexes a corresponding precoding vector w of the codebook, the precoding vectors of the codebook being e.g. ordered according to the angles of the resulting antenna pattern of the antennas A1 to A4.

For selecting an appropriate transmit format (modulation and coding scheme) for the downlink transmissions to e.g. the first user equipment UE1, the first user equipment UE1 estimates a single-user MIMO channel matrix H (e.g. from cell-specific reference symbols which are orthogonal per antenna A1 to A4). An optimum precoding vector $w_{PMI}$, (primary precoding vector) for downlink transmissions to the first user equipment UE1 is then chosen from the eight precoding vectors w of the codebook based on the channel estimate. The primary precoding vector $w_{PMI}$, typically optimizes a certain optimality metric such as a transmission throughput according to a specific scheduling criterion, or a maximum receive power at the first user equipment UE1. Once the primary precoding vector $w_{PMI}$, has been determined, a three-bit precoding vector index, PMI, indexing the primary precoding vector $w_{PMI}$, in the codebook is fed back from the first user equipment UE1 to the base station BS, together with a channel quality indicator **CQI** indicating a channel quality when using the primary precoding vector $w_{PMI}$, for scheduling the first user equipment UE1 on a specific time and frequency resource (block). The channel quality indicator CQI may then be used at the base station BS for selecting an appropriate transport format (modulation and coding scheme) for downlink transmissions to the first user equipment UE1 on the specific resource.

In the way described above, single-user MIMO with downlink precoding to the first user equipment UE1 can be provided. However, this approach has to be modified for multi-user MIMO, i.e. for the case that two or more user equipments UE1, UE2 are to be scheduled simultaneously on the same (time and frequency) resources. For multi-user MIMO, a selection of those combinations of precoding vectors which are best suited for multi-user transmissions has to be performed, i.e. for each primary precoding vector $w_{PMI}$, a number of secondary precoding vectors $w_{FCI}$ has to be determined for the pairing.

The secondary precoding vectors $w_{FCI}$ to be associated with a respective primary precoding vector $w_{PMI}$ may be chosen based on a general design principle which anticipates the attractive weight combinations for the pairing. The general design principle may be based on the following criteria:

- Angular properties of the weight vectors (e.g. angle of departure of computed maximum of antenna pattern);
- Orthogonality of the weight vectors;
- Quasi-orthogonality of the weight vectors: Checking a distance metric, e.g. a scalar product of the vectors and choosing combinations which result in a scalar product close to zero;
- SINR statistics obtained from simulations or measurements, tailored to antenna configuration, codebooks and propagation scenario.

In an example case with four closely-spaced correlated transmit antennas at the base-station in conjunction with a codebook designed to cover the angles of a sector by beamforming it is typical that, the secondary precoding vectors $w_{FCI}$ (indexed by a fixed companion index FCI) are taken from a subset of non-neighbored beams (as the neighbored ones for MU-MIMO would result in high cross-talk, thus being unattractive for pairing). It is also possible to use a statistics about the channel quality degradation when pairing precoding vectors w of the codebook with a respective primary precoding vector $w_{PMI}$, and selecting the secondary precoding vectors $w_{FCI}$ which result in the lowest average channel quality degradation delta-CQI, as those are the precoding vectors w which are the most attractive pairing choices. The number of fixed companions FCI associated with a respective codebook index PMI may be chosen as a trade-off between channel knowledge and required feedback rate.

Once the secondary precoding vectors $w_{FCI}$ have been found, an (implicitly) ordered set of fixed companion indices FCI is attributed to each codebook index PMI, e.g. in the following way:

| Codebook index (PMI) | ordered fixed companion indices (FCI) |
| --- | --- |
| 1 | 4,5,6,7 |
| 2 | 5,6,7,8 |
| 3 | 6,7,8,1 |
| 4 | 1,6,7,8 |

(continued)

| Codebook index (PMI) | ordered fixed companion indices (FCI) |
|---|---|
| 5 | 1,2,7,8 |
| 6 | 1,2,3,8 |
| 7 | 1,2,3,4 |
| 8 | 2,3,4,5 |

The ordered set of four fixed companion indices FCI associated with each codebook index PMI is known at both ends of a transmission link, i.e. both at the base station BS and at the user equipments UE1, UE2. The precoding vectors w which are indexed by the fixed companion indices FCI form an ordered set of secondary precoding vectors $w_{FCI}$.

The fixed companions may either be stored in a static way both at the base station BS and the user equipments UE1, UE2, or they may be attributed dynamically, i.e. the fixed companions FCI attributed with each codebook index PMI may be signaled on a forward link FL1, FL2 from the base station BS to the first and second user equipments UE1, UE2.

Once the first user equipment UE1 has determined the primary precoding vector $w_{PMI}$ with codebook index PMI, channel quality degradation information **delta-CQI1** to **delta-CQI4** is calculated for each of the four secondary precoding vectors $w_{FCI}$ in a similar way as the channel quality information CQI is calculated for the primary precoding vector $w_{PMI}$. An example of an explicit calculation of the channel quality degradation information will be given further below.

For each of the secondary precoding vectors $w_{FCI}$, a channel quality degradation information value delta-CQI1 to delta-CQI4 is fed back on a reverse link **RL** to the base station BS, the respective values being represented e.g. in the form of a sequence of thee bits. At the base station BS, the channel quality degradation information is then attributed to a corresponding fixed companion index FCI of the ordered set, such that the corresponding secondary precoding vector $w_{FCI}$ can be identified. The correlation is done based on an order of reception of the channel quality degradation information delta-CQI1 to delta-CQI4, i.e. by attributing the first, second, ... channel quality degradation information delta-CQI1, delta-CQI2, ... to the first, second, ... fixed companion index FCI of the ordered set.

The base station BS may then use its transmission unit **TU** for serving the first user equipment UE1 using the primary precoding vector $w_{PMI}$ and may select one of the secondary precoding vectors $w_{FCI}$ for serving the second user equipment UE2 on the same time and frequency resources. The selection of the specific secondary precoding vector $w_{FCI}$ used for the transmissions may be made in dependence on the corresponding quality degradation value and on further scheduling constraints. For instance, the secondary precoding vector $w_{FCI}$ having the smallest channel quality degradation value delta-CQI may be selected.

It will be understood that alternatively, in order to further reduce the required feedback rate, instead of providing channel degradation information for each of the secondary precoding vectors, a single channel degradation information value may be provided as a feedback to the base station, the single value being averaged over all fixed companions FCI. Averaging over at least part of the fixed companions is particularly advantageous when instead of a single codebook (as described above), a composite codebook (comprising two or more codebooks and respective codebook indices) is used. In this case, it is possible to perform signalling of the (individual) delta-CQIs associated to the first codebook, while forming an average over all possible entries of the second codebook (or vice versa). Alternatively, the averaging may be performed over a subset, e.g. best N, where N is an integer which could range from 1 to the number of codebook entries.

In the following, a detailed example for the determination of the channel quality degradation information delta-CQI in a user equipment UE1, UE2 will be given. As indicated above, the user equipment UE1, UE2 estimates the MIMO channel matrix H (e.g. from cell-specific reference symbols which are orthogonal per antenna) and determines the codebook index PMI of the primary precoding vector $w_{PMI}$ to be used for the transmissions to the first user equipment UE1.

The resulting linear SINR for the case of a single stream transmission may then be computed in the following way:

$$\gamma_{Rank1} = \frac{P_{Tx}\left|\mathbf{w}_{Rx.rank1}^{T}\ \mathbf{H}\ \mathbf{w}_{PMI}\right|^{2}}{I+N} \; ;$$

with $P_{Tx}$ denoting the transmit power, $w_{Rx,\ rank1}^{T}$ denoting the receive combiner for the transmit PMI weight (e.g. maximum ratio combiner MRC), H denoting the MIMO channel matrix, $w_{PMI}$ the primary precoding vector, $I$ the inter-cell interference power, and N the noise power. The inter-cell interference power $I$ and the noise power N are measured at the output of the receive combiner. With M, K being the number of receive and transmit antennas, respectively, H is of dimension M x K, $w_{PMI}$ is a K x 1 vector and $w_{Rx,rank1}^T$ is a 1 x M vector.

For each of the known weights of the secondary precoding vectors $w_{FCI}$ (obtained by reading out the corresponding table entries), the SINR at the output of a receive combiner (e.g. a minimum mean squared error combiner - MMSE) is calculated taking into account the resulting portion of intra-cell interference from the fixed companion weight. The resulting intra-cell interference $I_{int,ra}$ when having a pairing partner with a fixed companion index FCI is (in case the transmit power is split equally between the two users):

$$I_{\text{int }ra} = 0.5 \cdot P_{Tx} \left| \mathbf{w}_{Rx.MU}^{\mathrm{T}} \mathbf{H} \, \mathbf{w}_{FCI} \right|^2.$$

As indicated above, the secondary precoding vectors $w_{FCI}$ of the fixed companion indices FCI are known from a stored table. The receive weights $w_{Rx,MU}^T$ may be set equal to $w_{Rx,rank}^T$ (e.g. for the case of a MRC receiver) or they may be designed in order to suppress the multi-user interference, e.g. using an MMSE receiver.

The resulting linear SINR with the fixed companion index FCI is then given by:

$$\gamma_{pairing} = \frac{0.5 \cdot P_{Tx} \left| \mathbf{w}_{Rx.MU}^{\mathrm{T}} \mathbf{H} \, \mathbf{w}_{PMI} \right|^2}{I + N + I_{\text{int }ra}}.$$

It will be understood that a different power loading may be easily achieved by replacing the factor of 0.5 by a different value.

The channel quality degradation value delta-CQI may now be based on the SINR difference between rank 1 and paired transmission:

$$\Delta\gamma = 10\log_{10}\left(\gamma_{Rank1}\right) - 10\log_{10}\left(\gamma_{pairing}\right)$$

Now, either this difference may be reported directly as feedback information, or, e.g. in the case of LTE, it may be mapped to a change in desired transport format index, using adaptive modulation and coding.

In case of two multi-user streams and equal power splitting, it is evident that the SINR difference $\Delta\gamma$ will be at least 3dB. Therefore, one may subtract this value from the reporting value provided over the reverse link RL (and take it into account at the base station BS) to increase the dynamic range with the limited number of e.g. three bits which is used for quantization of the channel quality degradation information delta-CQI. For instance, when the transport formats are tailored to a 1 dB step size in SINR, for link adaptation, one implicitly subtracts three transport formats. The resulting channel quality degradation value delta-CQI now indicates the additional number of transport formats which have to be subtracted to consider the intra-cell interference correctly, e.g. 0-7 with 8 bits and uniform quantization. It is of course also possible to use nonuniform quantization. In the present case, the channel quality degradation values delta-CQI are negative, as they indicate a loss due to pairing, caused by intra-cell interference and splitting of transmit power.

In summary, the CQI information feedback provided in ordinary LTE systems only gives information for single-user MIMO. In the way described above, information for multi-user MIMO is provided which may be used to support: Knowledge of MU-MIMO intra-cell interference, user selection and scheduling (e.g. weighted sum rate scheduling), and link adaptation (appropriate choice of modulation and coding). All those aspects come along with a very low feedback rate, such that multi-user MIMO throughput and thus spectral efficiency may be increased using the above proposal.

Moreover, one skilled in the art will appreciate that although in the above description, the feedback has been designed for pairing two user equipments, i.e. two streams of MU-MIMO transmission, the approach described above may also be used to transmit to more than two users at the same time. In this case, for scheduling and link adaptation, delta-CQI information for more than two MU-MIMO streams may be estimated in an appropriate way, e.g. based on the existing available delta-CQI information for pairing.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. Base station (BS) for a SDMA-capable cell (C) of a radio communications system (1) said base station (BS) adapted for:

   receiving precoding vector information (PMI) indicating a primary precoding vector ($w_{PMI}$) in an ordered set of precoding vectors (w),
   receiving channel quality information (CQI) indicating a channel quality when using the primary precoding vector ($w_{PMI}$) for scheduling a first user equipment (UE1),
   receiving channel quality degradation information (delta-CQl1 to delta-CQ14) indicating a degradation of a channel quality when scheduling a second user equipment (UE2) on the same time and frequency resources using a secondary precoding vector ($w_{FCI}$),
   **characterized in that**
   the secondary precoding vector ($w_{FCI}$) is one of a pre-defined ordered set of secondary precoding vectors which is associated with the primary precoding vector ($w_{PMI}$) for which the precoding vector information (PMI) is received, the base station (BS) being further adapted for:

   correlating the channel quality degradation information (delta-CQI1 to delta-CQ14) with corresponding secondary precoding vectors ($w_{FCI}$) of the associated ordered set based on an order of reception of the channel quality degradation information (delta-CQ11 to delta-CQ14).

2. Base station according to claim 1, further comprising:

   a transmission unit (TU) adapted for serving the first user equipment (UE1) using the primary precoding vector ($w_{PMI}$), the transmission unit (TU) being further adapted for serving the second user equipment (UE2) on the same time and frequency resources using one of the plurality of secondary precoding vectors ($w_{FCI}$).

3. Base station according to claim 1 or 2, further adapted for signaling information about the ordered sets of secondary precoding vectors ($w_{FCI}$) associated with respective primary precoding vectors ($w_{PMI}$) to the user equipments (UE1, UE2) of the cell (C).

4. User equipment (UE1, UE2) for a SDMA capable cell (C) of a radio communications system (1), said user equipment (UE1, UE2) adapted for:

   generating precoding vector information (PMI) for indicating a primary precoding vector ($w_{PMI}$) in an ordered set of precoding vectors (w),
   generating channel quality information (CQI) indicating a channel quality when using the primary precoding vector ($w_{PMI}$) for scheduling a first user equipment (UE1),
   **characterized by**
   generating an ordered set of channel quality degradation information (delta-CQI1 to delta-CQI4) indicating a degradation of a channel quality when scheduling a second user equipment (UE2) on the same time and frequency resources using a secondary precoding vector ($W_{FCI}$) from a pre-defined ordered set of secondary precoding vectors being associated with the primary precoding vector ($w_{PMI}$) for which the precoding vector information (PMI) is generated.

**5.** User equipment according to claim 4, further adapted for: determining the channel quality degradation information (delta-CQ11 to delta-CQ14) from a channel quality after receive combining, taking intra-cell interference due to transmissions using the secondary precoding vector ($W_{FCI}$) into account.

**6.** User equipment according to claim 4 or 5, wherein an influence of a pre-defined power splitting to the user equipments (UE1, UE2) on the channel quality degradation is removed from the channel quality degradation information (delta-CQI1 to delta-CQI4).

**7.** SDMA-capable cell (C) for a radio communications system (1), said cell (C) comprising:

at least one of a base station (BS) according to any one of claims 1 to 3 and a user equipment (UE1, UE2) according to any one of claims 4 to 6.

**8.** Radio communications system (1) comprising at least one SDMA-capable cell (C) according to claim 7.

**9.** Method for providing information for scheduling at least two user equipments (UE1, UE2) on the same resources of a SDMA-capable cell (C) of a radio communications system (1), the method comprising:

providing precoding vector information (PMI) indicating a primary precoding vector ($w_{PMI}$) in an ordered set of precoding vectors (w),
providing channel quality information (CQI) indicating a channel quality when using the primary precoding vector ($w_{PMI}$) for scheduling a first user equipment (UE1),
**characterized by**
providing an ordered set of channel quality degradation information (delta-CQI1 to delta-CQ14) indicating a degradation of a channel quality when scheduling a second user equipment (UE2) on the same time and frequency resources using a secondary precoding vector ($w_{FCI}$) of a pre-defined ordered set of secondary precoding vectors being associated with the primary precoding vector ($w_{PMI}$) for which the precoding vector information (PMI) is generated.

**10.** Method according to claim 9, wherein an attribution of precoding vectors (w) to the pre-defined ordered set of secondary precoding vectors is performed based on at least one of a relation of the precoding vectors (w) to the primary precoding vector ($w_{PMI}$), in particular a distance metric to the primary precoding vector ($w_{PMI}$), and a channel quality statistics within the cell (C).

**11.** Method according to claim 9 or 10, wherein a pre-defined power splitting to the user equipments (UE1, UE2) is performed, and wherein a contribution of the pre-defined power splitting on the channel quality degradation is removed from the channel quality degradation information (delta-CQI1 to delta-CQI4).

**12.** Method according to anyone of claims 9 to 11, further comprising:

determining the channel quality degradation information (delta-CQI1 to delta-CQI4) from a channel quality after receive combining, taking intra-cell interference due to transmissions using the secondary precoding vector ($w_{FCI}$) into account.

**13.** The method according to anyone of claims 9 to 12, wherein the providing of information comprises:

receiving the precoding vector information (PMI), the channel quality information (CQI), and the channel quality degradation information (delta-CQI1 to delta-CQI4) in a base station (BS) of the cell (C), and
correlating the channel quality degradation information (delta-CQI1 to delta-CQI4) with corresponding secondary precoding vectors ($w_{FCI}$) of the selected ordered set based on an order of reception of the channel quality degradation information (delta-CQI1 to delta-CQI4).

**14.** The method according to claim 13, further comprising: serving the first user equipment (UE1) using the primary precoding vector ($w_{PMI}$), and serving the second user equipment (UE2) on the same time and frequency resources using one of the plurality of secondary precoding vectors ($w_{FCI}$).

**15.** The method according to claim 13 or 14, further comprising: signaling information about the ordered set of secondary precoding vectors ($w_{FCI}$) associated with a respective primary precoding vector ($w_{PMI}$) from the base station (BS) to the user equipments (UE1, UE2) of the cell (C).

**Patentansprüche**

1. Basisstation (BS) für eine SDMA-fähige Zelle (C) eines Funkkommunikationssystems (1), wobei die besagte Basisstation (BS) ausgelegt ist für:

   Den Empfang von Vorcodierungsvektorinformationen (PMI), welche einen primären Vorcodierungsvektor ($W_{PMI}$) in einem geordneten Satz von Vorcodierungsvektoren (w) angeben,
   den Empfang von Kanalqualitätsinformationen (CQI), welche eine Kanalqualität bei Verwendung des primären Vorcodierungsvektors ($VV_{PMI}$) für die Planung eines ersten Benutzerendgeräts (UE1) angeben,
   den Empfang von Kanalqualitätsverlustinformationen (delta-CQI1 bis delta CQI4), welche einen Verlust einer Kanalqualität bei der Planung eines zweiten Benutzerendgeräts (UE2) auf denselben Zeit- und Frequenzressourcen unter Verwendung eines sekundären Vorcodierungsvektors ($W_{FCI}$) angeben,
   **dadurch gekennzeichnet, dass**
   der sekundäre Vorcodierungsvektor ($W_{FCI}$) ein Vorcodierungsvektor eines vordefinierten geordneten Satzes von sekundären Vorcodierungsvektoren ist, welcher mit dem primären Vorcodierungsvektor ($W_{PMI}$), für welchen die VorcodierungsvektorInformationen (PMI) empfangen werden, assoziiert ist, wobei die Basisstation (BS) weiterhin ausgelegt Ist für das:

   Korrelleren der Kanalqualltätsverlustinformationen (delta-CQI1 bis delta-CQI4) mit entsprechenden sekundären Vorcodierungsvektoren ($W_{FCI}$) des assoziierten geordneten Satzes auf Basis einer Reihenfolge des Empfangs der Kanalqualitätsverlustinformationen (delta-CQI1 bis delta-CQI4).

2. Basisstation nach Anspruch 1, weiterhin umfassend:

   Eine Übertragungseinheit (TU), ausgelegt für die Bedienung des ersten Benutzerendgeräts (UE1) unter Verwendung des primären Vorcodierungsvektors ($W_{PMI}$), wobei die Übertragungseinheit (TU) weiterhin für die Bedienung des zweiten Benutzerendgeräts (UE2) auf denselben Zelt- und Frequenzressourcen unter Verwendung eines der Vielzahl von sekundären Vorcodierungsvektoren ($W_{FCI}$) ausgelegt ist.

3. Basisstation nach Anspruch 1 oder 2, weiterhin ausgelegt für das Signalisieren von Informationen über die geordneten Sätze von sekundären Vorcodierungsvektoren ($W_{FCI}$), welche mit den jeweiligen primären Vorcodierungsvektoren ($W_{PMI}$) assoziert sind, an die Benutzerendgeräte (UE1, UE2) der Zelle (C).

4. Benutzerendgerät (UE1, UE2) für eine SDMA-fähige Zelle (C) eines Funkkommunikationssystems (1), wobei das besagte Benutzerendgerät (UE1, UE2) ausgelegt Ist für:

   Das Erzeugen von Vorcodierungsvektorinformationen (PMI) zur Angabe eines primären Vorcodierungsvektors ($W_{PMI}$) In einem geordneten Satz von Vorcodierungsvektoren (w),
   das Erzeugen von Kanalqualitätsinformationen (CQI) zur Angabe einer Kanalqualität bei Verwendung des primären Vorcodierungsvektors ($W_{PMI}$) für die Planung eines ersten Benutzerendgeräts (UE1),
   **gekennzeichnet durch**
   das Erzeugen eines geordneten Satzes von Kanalqualitätsverlustinformationen (delta-CQI1 bis delta-CQI4) zur Angabe eines Verlustes einer Kanalqualität bei der Planung eines zweiten Benutzerendgeräts (UE2) auf denselben Zeit- und Frequenzressourcen unter Verwendung eines sekundären Vorcodierungsvektors ($W_{FCI}$) aus einem vordefinierten geordneten Satz von sekundären Vorcodierungsvektoren, der mit dem primären Vorcodierungsvektor ($W_{PMI}$), für welchen die Vorcodierungsvektorinformationen (PMI) erzeugt werden, assoziiert ist.

5. Benutzerendgerät nach Anspruch 4, weiterhin ausgelegt für das Ermitteln der Kanalqualitätsverlustinformationen (delta-COI1 bis delta-CQI4) aus einer Kansiqualität nach Kombinieren des Empfangs, unter Berücksichtigung von Interferenzen zwischen den Zellen, welche von Übertragungen unter Verwendung des sekundären Vorcodierungsvektors ($W_{FCI}$) verursacht werden.

6. Benutzerendgerät nach Anspruch 4 oder 5, wobei eine Auswirkung einer vordefinierten Aufteilung der Leistung auf die Benutzerendgeräte (UE1, UE2) auf den Kanalqualitätsverlust aus den KanalqualitätsverlustInformationen (delta-CQI1 bis delta-CQI4) entfernt wird.

**7.** SDMA-fähige Zelle (C) für ein Funkkommunikationssystem (1), wobei die besagte Zelle (C) umfasst:

Mindestens entweder eine Basisstation (BS) gemäß einem beliebigen der Ansprüche 1 bis 3, oder ein Benutzerendgerät (UE1, UE2) gemäß einem beliebigen der Ansprüche 4 bis 6.

**8.** Funkkommunikationssystem (1), umfassend mindestens eine SDMA-fähige Zelle (C) gemäß Anspruch 7.

**9.** Verfahren zur Bereitstellung von Informationen für die Planung von mindestens zwei Benutzerendgeräten (UE1, UE2) auf denselben Ressourcen einer SDMA-fählgen Zelle (C) eines Funkkommunikationssystems (1), wobei das Verfahren umfasst:

Bereitstellen von Vorcodierungsvektorinformationen (PMI), welche einen primären Vorcodierungsvektor ($W_{PMI}$) in einem geordneten Satz von Vorcodierungsvektoren (w) angeben,
Bereitstellen von Kanalqualltätsinformationen (CQI), welche eine Kanalqualität bei Verwendung des primären Vorcodierungsvektors ($W_{PMI}$) für die Planung eines ersten Benutzerendgeräts (UE1) angeben,
**gekennzeichnet durch**
das Bereitstellen eines geordneten Satzes von Kanalqualltätsverlustinformationen (delta-CQI1 bis delta CQI4), welche einen Verlust einer Kanalqualität bei der Planung eines zweiten Benutzerendgeräts (UE2) auf denselben Zelt- und Frequenzressourcen unter Verwendung eines sekundären Vorcodierungsvektors ($W_{FCI}$) aus einem vordefinierten geordneten Satz von sekundären Vorcodierungsvektoren, der mit dem primären Vorcodierungsvektor ($W_{PMI}$), für welchen die Vorcodierungsvektorinformationen (PMI) erzeugt werden, assoziiert ist, angeben.

**10.** Verfahren nach Anspruch 9, wobei eine Zuordnung von Vorcodierungsvektoren (w) zu dem vordefinierten geordneten Satz von sekundären Vorcodierungsvektoren auf der Basis mindestens entweder einer Beziehung der Vorcodierungsvektoren (w) zu dem primären Vorcodierungsvektor ($W_{PMI}$), insbesondere einer Abstandsmetrik zu dem primären Vorcodierungsvektor ($W_{PMI}$), oder einer Kanalqualitätsstatistik innerhalb der Zelle (C) erfolgt.

**11.** Verfahren nach Anspruch 9 oder 10, wobei eine vordefinierte Aufteilung der Leistung auf die Benutzerendgeräte (UE1, UE2) durchgeführt wird, und wobei eine Kontribution der vordefinierten Aufteilung der Leistung zur dem Kanalqualitätsverlust aus den KanalqualitätsverlustInformationen (delta-CQI1 bis delta-CQ14) entfernt wird.

**12.** Verfahren nach einem beliebigen der Ansprüche 9 bis 11, weiterhin umfassend:

Ermitteln der Kanalqualitätsverlustinformationen (delta-CQI1 bis delta-CQI4) aus einer Kanalqualität nach Kombinieren des Empfangs, unter Berücksichtigung von Interferenzen zwischen den Zellen, welche von Übertragungen unter Verwendung des sekundären Vorcodierungsvektors ($W_{FCI}$) verursacht werden.

**13.** Verfahren nach einem beliebigen der Ansprüche 9 bis 12, wobei das Bereitstellen von Informationen umfasst:

Empfangen der Vorcodierungsvektorinformationen (PMI), der Kanalqualitätsinformationen (CQI) und der Kanalqualitätsverlustinformationen (delta-CQI1 bis delta-CQI4) in einer Basisstation (BS) der Zelle (C), und Korrelieren der Kanalqualitätsverlustinformationen (delta-CQI1 bis delta-CQ14) mit entsprechenden sekundären Vorcodierungsvektoren ($W_{FCI}$) des ausgewählten geordneten Satzes auf Basis einer Reihenfolge des Empfangs der Kanalqualitätsverlustinformationen (delta-CQ11 bis delta-CQ14).

**14.** Verfahren nach Anspruch 13, weiterhin umfassend: Bedienen des ersten Benutzerendgeräts (UE1) unter Verwendung des primären Vorcodierungsvektors $W_{PMI}$), und Bedienen des zweiten Benutzerendgeräts (UE2) auf denselben Zelt- und Frequenzressourcen unter Verwendung eines der Vielzahl von sekundären Vorcodierungsvektoren ($W_{FCI}$)

**15.** Verfahren nach Anspruch 13 oder 14, weiterhin umfassend: Signalisieren von Informationen über den geordneten Satz von sekundären Vorcodierungsvektoren ($W_{FCI}$), welche mit einem jewelligen primären Vorcodierungsvektor ($W_{PMI}$) assoziiert sind, von der Basisstation (BS) an die Benutzerendgeräte (UE1, UE2) der Zelle (C).

**Revendications**

**1.** Station de base (BS) pour une cellule (C) compatible SDMA d'un système de radiocommunication (1), ladite station de base (BS) étant adaptée pour ;

réception d'une Information de vecteur de précodage (PMI) indiquant un vecteur de précodage primaire (W$_{PMI}$) dans un ensemble ordonné de vecteurs de précodage (w), réception d'une Information de qualité de canal (CQI) indiquant une qualité de canal lors de l'utilisation du vecteur de précodage primaire (W$_{PMI}$) pour ordonnancer un premier équipement d'utilisateur (UE1),

réception d'une information de dégradation de la qualité de canal (delta-CQI1 à delta CQI4) indiquant une dégradation d'une qualité de canal lors de l'ordonnancement d'un deuxième équipement d'utilisateur (UE2) sur les mêmes ressources de temps et de fréquence en utilisant un vecteur de précodage secondaire (W$_{FCI}$),

**caractérisée en ce que**

le vecteur de précodage secondaire (W$_{FCI}$) fait partie d'un ensemble ordonné prédéfini de vecteurs de précodage secondaires et est associé avec le vecteur de précodage primaire (W$_{PMI}$) pour lequel est reçue l'Information de vecteur de précodage (PMI), la station de base (BS) étant en outre adaptée pour : corréler l'information de dégradation de la qualité de canal (delta-CQI1 à delta CQI4) avec des vecteurs de précodage secondaires correspondants (W$_{FCI}$) de l'ensemble ordonné associé en se basant sur un ordre de réception de l'information de dégradation de la qualité de canal (delta-CQI1 à delta CQI4).

2. Station de base selon la revendication 1, comprenant en outre : une unité d'émission (TU) adaptée pour desservir le premier équipement d'utilisateur (UE1) en utilisant le vecteur de précodage primaire (W$_{PMI}$), l'unité d'émission (TU) étant en outre adaptée pour desservir le deuxième équipement d'utilisateur (UE2) sur les mêmes ressources de temps et de fréquence en utilisant l'un de la pluralité de vecteurs de précodage secondaires (W$_{FCI}$)

3. Station de base selon la revendication 1 ou 2, adaptée en outre pour signaler aux équipements d'utilisateur (UE1, UE2) de la cellule (C) des informations à propos des ensembles ordonnés de vecteurs de précodage secondaires (W$_{FCI}$) associés avec les vecteurs de précodage primaires (W$_{PMI}$) respectifs.

4. Équipement d'utillisateur (UE1, UE2) pour une cellule (C) compatible SDMA d'un système de radiocommunication (1), ledit équipement d'utilisateur (UE1, UE2) étant adapté pour :

générer une information de vecteur de précodage (PMI) pour Indiquer un vecteur de précodage primaire (W$_{PMI}$) dans un ensemble ordonné de vecteurs de précodage (w),

générer une information de qualité de canal (CQI) indiquant une qualité de canal lors de l'utilisation du vecteur de précodage primaire (W$_{PMI}$) pour ordonnancer un premier équipement d'utilisateur (UE1),

**caractérisé par**

génération d'un ensemble ordonné d'informations de dégradation de la qualité de canal (delta-CQI1 à delta CQI4) Indiquant une dégradation d'une qualité de canal lors de l'ordonnancement d'un deuxième équipement d'utilisateur (UE2) sur les mêmes ressources de temps et de fréquence en utilisant un vecteur de précodage secondaire (W$_{FCI}$) à partir d'un ensemble ordonné prédéfini de vecteurs de précodage secondaires qui sont associés avec le vecteur de précodage primaire (W$_{PMI}$) pour lequel l'Information de vecteur de précodage (PMI) est générée.

5. Équipement d'utilisateur selon la revendication 4, en outre adapté pour : déterminer l'information de dégradation de la qualité de canal (delta-CQI1 à delta-CQI4) à partir d'une qualité de canal après la réception en combinant et en tenant compte des interférences intra-cellule liées aux émissions en utilisant le vecteur de précodage secondaire (W$_{FCI}$).

6. Équipement d'utilisateur selon la revendication 4 ou 5, avec lequel une influence d'un fractionnement prédéfini de la puissance vers les équipements d'utilisateur (UE1, UE2) sur la dégradation de la qualité de canal est supprimée de l'Information de dégradation de la qualité de canal (delta-CQII1 à delta-CQI4).

7. Cellule (C) compatible SDMA pour un système de radiocommunication (1), ladite cellule (C) comprenant :

au moins une station de base (BS) selon l'une quelconque des revendications 1 à 3 et un équipement d'utilisateur (UE1, UE2) selon l'une quelconque des revendications 4 à 6.

8. Système de radiocommunication (1) comprenant au moins une cellule (C) compatible SDMA selon la revendication 7.

9. Procédé de fourniture d'informations pour l'ordonnancement d'au moins deux équipements d'utilisateur (UE1, UE2) sur les mêmes ressources d'une cellule (C) compatible SDMA pour un système de radiocommunication (1), le procédé comprenant les étapes suivantes : fourniture d'une Information de vecteur de précodage (PMI) indiquant un vecteur de précodage primaire (W$_{PMI}$) dans un ensemble ordonné de vecteurs de précodage (w), fourniture d'une Information de qualité de canal (CQI) Indiquant une qualité de canal lors de l'utilisation du vecteur de précodage primaire (W$_{PMI}$) pour ordonnancer un premier équipement d'utilisateur (UE1),
**caractérisé par**
fourniture d'un ensemble ordonné d'informations de dégradation de la qualité de canal (delta-COI1 à delta CQI4) indiquant une dégradation d'une qualité de canal lors de l'ordonnancement d'un deuxième équipement d'utilisateur (UE2) sur les mêmes ressources de temps et de fréquence en utilisant un vecteur de précodage secondaire (W$_{FCI}$) d'un ensemble ordonné prédéfini de vecteurs de précodage secondaires qui sont associés avec le vecteur de précodage primaire (W$_{PMI}$) pour lequel l'information de vecteur de précodage (PMI) est générée.

10. Procédé selon la revendication 9, selon lequel une attribution des vecteurs de précodage (w) à l'ensemble ordonné prédéfini de vecteurs de précodage secondaires est effectuée en se basant au moins sur une relation des vecteurs de précodage (w) avec le vecteur de précodage primaire (W$_{PMI}$), notamment une mesure de la distance par rapport au vecteur de précodage primaire (W$_{PMI}$), ou sur une statistique de qualité de canal au sein de la cellule (C).

11. Procédé selon la revendication 9 ou 10, selon lequel un fractionnement prédéfini de la puissance vers les équipements d'utilisateur (UE1, UE2) est effectué, et selon lequel une contribution du fractionnement prédéfini de la puissance à la dégradation de la qualité de canal est supprimée de l'information de dégradation de la qualité de canal (delta-CQI1 à delta-CQI4).

12. Procédé selon l'une quelconque des revendications 9 à 11, comprenant en outre:

détermination de l'information de dégradation de la qualité de canal (delta-CQI1 à delta-CQI4) à partir d'une qualité de canal après la réception en combinant et en tenant compte des Interférences intra-cellule liées aux émissions en utilisant le vecteur de précodage secondaire (W$_{FCL}$).

13. Procédé selon l'une quelconque des revendications 9 à 12, selon lequel la fourniture d'informations comprend :

réception de l'information de vecteur de précodage (PMI), de l'information de qualité de canal (CQI) et de l'information de dégradation de la qualité de canal (delta-CQI1 à delta CQI4) dans une station de base (BS) de la cellule (C) et corrélation de l'information de dégradation de la qualité de canal (delta-CQI1 à delta CQI4) avec des vecteurs de précodage secondaires correspondants (W$_{FCI}$) de l'ensemble ordonné sélectionné en se basant sur un ordre de réception de l'information de dégradation de la qualité de canal (delta-CQI1 à delta CQI4).

14. Procédé selon la revendication 13, comprenant en outre : desserte du premier équipement d'utilisateur (UE1) en utilisant le vecteur de précodage primaire (W$_{PMI}$), et desserte du deuxième équipement d'utilisateur (UE2) sur les mêmes ressources de temps et de fréquence en utilisant l'un de la pluralité de vecteurs de précodage secondaires (W$_{FCI}$)

15. Procédé selon la revendication 13 ou 14, comprenant en outre: signalisation aux équipements d'utilisateur (UE1, UE2) de la cellule (C) des informations à propos de l'ensemble ordonné de vecteurs de précodage secondaires (W$_{FCI}$) associés avec un vecteur de précodage primaire (W$_{PMI}$) respectif.

Fig.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Estimation of extended PMI feedback signalling required for user intra-cell and inter-cell coordination. *3GPP TSG RAN WG1 #59bis meeting, R1-100419, Valencia, Spain,* 12 January 2010